# EUROPEAN PATENT APPLICATION

(11) **EP 3 895 785 A1**
(43) Date of publication of application: **20.10.2021**
(21) Application number: 20182394.5
(22) Date of filing: 20.12.2011
(51) Int. Cl.: B01D 53/50, B01D 53/56, B01D 53/62, C02F 1/469, C02F 103/08

(54) **UNIT FOR DESALINATION AND GREENHOUSE GAS SEQUESTRATION**

(30) Priority: 22.12.2010 GB 201021701
(62) Divisional of application: 11815770.0
(71) Applicant: Future Environmental Technologies Ltd, Bristol BS20 7DF (GB)
(72) Inventor: HENDAWI, Adel, Portishead, Bristol BS20 6NP (GB)
(74) Representative: Thurston, Joanna

(57) **Abstract**

The invention relates to processing units and to methods for their use. In particular, the invention relates to desalination and greenhouse gas (GHG) sequestration units and methods for use. The processing units will typically comprise an electrochemical separation cell in fluid communication with, a cathodic reaction cell, and an anodic reaction cell; wherein in use: the separation cell comprises an ion-containing first aqueous solution, the cathodic reaction cell comprises a second aqueous solution including the cathodic products of electrochemical separation of the first aqueous solution, and the anodic reaction cell comprises a third aqueous solution including the anodic products of electrochemical separation of the first aqueous solution.

## Description

### Field of invention

The invention relates to processing units and to methods for their use. In particular, the invention relates to desalination and greenhouse gas (GHG) sequestration units and methods for use.

### Background to the Invention

In view of the ever increasing global population, and the resultant increase in water consumption for domestic, agricultural and industrial use, a solution to the problem of desalination of sea or other salt water for use as potable water is desirable. Similarly, a solution to the problem of reducing greenhouse gas emissions is actively sought.

Many desalination methods have been suggested, including distillation, ion exchange, and EDR (electrodialysis reversal) desalination.

There is also a pressing global need for methods of addressing GHG emissions, particularly from power plants and by heavy industry.

Various methods have been proposed for the selective separation of carbon dioxide and/or other greenhouse gases followed by either storage or conversion to metal salts such as, for carbon dioxide, calcium carbonate. Such sequestration methods include carbon-capture and separation techniques (CCS).

It has been suggested that solvent extraction followed by separation and storage may be of use. For instance, the utilisation of alkaline metal hydroxides to absorb and react with GHG, the application of sodium chloride chloro-cells to GHG containing solutions and other electrochemical technologies such as the use of cathode-cathode electro cells.

Skyonic have developed a system in which greenhouse gases can be sequestered by reaction with sodium chloride and hydrochloric acid in water using a chlor-alkali cell.

The products of the reaction are precipitated from solution and used in cement manufacturing or as bleaches.

Calera have developed a similar system using the electrodialysis of sea water in combination with fly ash, sodium hydroxide, softened water and alkaline metals. As with the Skyonic system, the products of the reaction are used in cement manufacture.

Ecospec Global Technology have developed a system for the treatment of water in an electromagnetic field (see WO 2007/015684). However, purification or GHG sequestration is not discussed.

The chemistry controlling electro-deposition and separation is well known and states that:
- the amount of substance liberated at the electrodes of a cell is directly proportional to the quantity of electricity which passes through the cell solution.
- the amount of a chemical substance which is deposited or liberated by a quantity of electricity is proportional to the chemical equivalence. For example: salts in water will be present in an ion (soluble) form e.g. sodium chloride will be present in a solution as Sodium (Na⁺) and Chloride (Cl⁻) as in following equation: NaCl → Na⁺ + Cl⁻
- in an electric field the positive ions will migrate to the negative electrode (cathode) and the negative ions will migrate to the positive electrode (anode).

The invention provides an application of these principles to fulfil an industry need for an alternative, desirably improved, method of electrochemical processing which can be utilised for, for instance, desalination and/or GHG sequestration.

In some applications, the invention represents a development of known CCS techniques, to include an exchange step, resulting in a previously unknown carbon-capture separation and exchange technique, CCSx.

### Summary of the Invention

According to a first aspect of the invention there is therefore provided a processing unit comprising:
an electrochemical separation cell ("the separation cell) in fluid communication with,
a cathodic reaction cell, and
an anodic reaction cell;
wherein in use:
the separation cell comprises an ion-containing first aqueous solution,
the cathodic reaction cell comprises a second aqueous solution including the cathodic products of electrochemical separation of the first aqueous solution, and
the anodic reaction cell comprises a third aqueous solution including the anodic products of electrochemical separation of the first aqueous solution.

The invention is capable of use in a wide variety of applications, including greenhouse gas sequestration, desalination and in the adjustment of pH. These are discussed below. It is an advantage of the invention that these applications may be used alone or in combination, and that the processing unit may be applied specifically to one particular application, but also derive the advantages of the other aspects of the invention.

Specific advantages of the processing unit, which may be derived depending upon the configuration of adopted for the unit, include:
- the need to use only starting materials which are available locally (e.g. sea water). This is not the case for known processing units, at least where they are in use as desalination or GHG sequestration systems. In such systems it is typically the case that starting materials, in particular salts to act as sources of ions, must be transported to the site of remediation, increasing the environmental impact of these prior art systems. Further, because of the simplicity of the starting materials used with the processing units of the invention, no heavy chemicals are required, reducing the monitoring necessary in use and the authorisations necessary to begin using the inventive units;
- the potential to produce a range of useful products using the processing unit of the invention. These include, potable water, chlorine gas, sulfuric acid, hydrogen, hypochlorite bleach, nitrogen gas, oxygen gas, and a range of salts;
- desalination and GHG sequestration applications;
- low environmental footprint of the processing units in terms of energy consumption and carbon miles needed to keep the units operational; and
- the ability to control the pH of the solutions released from the processing unit, so that these will be environmentally benign, and potentially beneficial to the environment.

In addition, many of the products of the reactions are commercially useful and can used in other applications. Alternatively, the products of the cathodic reaction cell, in particular, are non-toxic and can be released into the environment without causing harm if desired.

The processing unit of the invention may often be formed, for instance, from cation and anion resin cells, or from different compartments in fluid communication with one another.

In some instances, the processing unit will additionally comprise a conditioning cell in fluid communication with the separation cell. It will often be the case that the first aqueous solution is formed from water which has first passed through the conditioning cell.

Although in some instances the conditioning cell will be absent, it is generally present and will be used to pre-treat either or both of the water which will enter the separation cell and form the first aqueous solution, or the water which will enter the cathodic reaction cell and form the second aqueous solution. However, where only one water stream is treated, it will be the stream entering the separation cell, also referred to as the "main stream". In many instances, where the stream of water entering the cathodic reaction cell is not passed through the conditioning cell, it will be filtered, although this is desirable to prevent clogging of the cell and hence to reduce operational downtime for maintenance purposes, it is not essential. This stream of water is also referred to as the "secondary stream".

The treatment of the main stream prior to entry into the electrochemical separation cell helps to prevent fouling of the cell, for instance by organic or biological media which may be removed by the conditioning cell using standard techniques. In particular, it will often be desirable that the separation cell includes cation and anion selective membranes. The fouling of these membranes can be reduced or prevented by passing the main stream through the conditioning cell prior to electrochemical separation in the separation cell.

In many cases the membranes will each form a permeable wall spanning the separation cell, so that only the ion to which the membrane is permeable may pass beyond that point within the cell. The membranes will typically be arranged with the cation selective membrane proximal the cathode and the anion selective membrane proximal the anode. Such an arrangement helps to ensure that the cathodic and anodic products of electrolysis do not recombine. In addition, the passing of the cathodic and anodic products through their respective membranes as they are drawn towards the cathode and anode helps to concentrate the products facilitating transfer to the cathodic and anodic reaction cells.

In addition, in order to help facilitate this transfer, the fluid communication between the separation cell and the cathodic and anodic reaction cells is often unidirectional from the separation cell to the cathodic and anodic reaction cells. This prevents any back transfer of the cathodic and anodic reaction products to the separation cell once they have been produced and provides for the possibility of a continuous flow system. The unidirectional flow will be achieved using one of the many methods known in the art including the integration of one way valves or pumps into the unit.

In use, three aqueous solutions are formed in the processing unit of the invention. A first aqueous solution in the separation cell, a second aqueous solution in the cathodic reaction cell and a third aqueous solution in the anodic reaction cell. These may be formed from the same or different water sources, or "streams". It is one of the advantages of the invention that GHG sequestration and desalination can be achieved using only a source of water, the processing unit, and electrochemistry, without the need for additional reactants. For instance, many known methods require the addition of alkaline metals, or fly ash and will only work effectively if soft water is used. Not only does the process of the invention not require such components, but it is tolerant to waters of different hardness. In addition, no heating component is needed in the processing unit of the invention, as it is based upon electrochemical techniques. Many known methods for, in particular, carbon capture, require heating in order for carbon sequestration to occur.

In many cases, the first and second aqueous solutions are formed from water from the same source. It is desirable that the water source or sources used for the first and second aqueous solutions contain ions, and hence sea, river or domestic tap water are all appropriate for use. In many cases, particularly for desalination applications, the source of the main and secondary streams of water and hence the first and second aqueous solutions will independently be sea water.

Where the water forming the main and secondary streams is from the same source, and a tertiary stream from an alternative water source, typically 60 - 80% of the water will form the main stream, often 65 - 75%. The remaining water, 20 - 40%, often 25-35% will form the secondary stream.

The water in a tertiary stream, namely the water forming the third aqueous solution in the anodic reaction chamber, desirably contains fewer ions than the main and secondary streams. As a result, although the tertiary stream may be from the same source as the main and secondary streams, it will typically be from a different source, often purified water. Purified water may be water prepared by including distillation, reverse osmosis, carbon filtration, microfiltration, ultrafiltration, ultraviolet oxidation or even electrodialysis. Deionised or distilled water, are particularly preferred, deionised being most often used for reasons of economics. As used herein, the term "purified water" is typically intended to mean waters with a conductivity of less than or equal to 10 µS·cm⁻¹ at 25°C, often 5 µS·cm⁻¹. In some examples of the invention the third aqueous solution is acidified, often with sulfuric acid. Such acidification can help to neutralise the anodic products of separation.

The ions of the first and/or second aqueous solutions may be any ions commonly found in water, however they will often be selected from ions found in sea water and/or solubilised GHG. This is particularly the case where the water source for the main and secondary streams is sea water, and/or where the processing unit is being used in GHG sequestration applications. The ions will be a combination of anions and cations, the cations will include those of the alkali and alkaline earth metals and the anions will include acidic components. The ions may be, for instance, selected from sodium, potassium, iron, calcium, magnesium, phosphorus, cyanide, carbonate, chloride, sulfate, sulfite, nitrate, and nitrite. Often, sodium, potassium, calcium, magnesium, chloride, sulfate and nitrate. The concentration of ions will depend upon the water source(s) chosen.

Depending upon the ions present in the water forming the first aqueous solution, the cathodic products of electrochemical separation may include calcium, sodium, magnesium and phosphorus; the anodic products of electrochemical separation may include chloride and sulfate.

As can be seen, a range of parameters must be controlled, such a flow rates, current, collection rates etc. In addition, indicators such as pH and ion concentration must also be monitored, to provide the information necessary to determine whether the system inputs, such as flow rate or current, must be changed. Monitoring of the processing unit is within the remit of the person skilled in the art and may be carried out manually or by computer.

The physical dimensions of the processing unit of the invention may be varied as appropriate for application. However, in many cases, the separation cell will be slightly larger than the anodic and cathodic reaction cells which will typically, although not essentially, be the same size as one another. Sample volumes include, for the separation cells, a total volume in the range 2-20 litres, often 5-15 or 5-10 litres in some embodiments 6-8 litres, often around 7 litres. For the anodic and cathodic reaction cells these may independently have volumes in the range 1-15 litres, often 2-10 litres in some examples 4-7 litres or 5-6 litres each. The skilled person would be able to identify appropriate height, width and depth dimensions in order to achieve compartments with these volumes. It will often be the case that each cell (the separation cell, cathodic reaction cell, and anodic reaction cell, will independently have an active surface area (i.e. an area on which reaction can occur) independently in the range 0.1-2 m², often 0.5-1.5 m², often 0.8-1.2 m² and in many examples of the invention around 1 m².

There is therefore provided, according to a second aspect of the invention, a desalination unit comprising:
a conditioning cell in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises a first aqueous solution including conditioned sea water,
the cathodic reaction cell comprises a second aqueous solution including the cathodic products of electrochemical separation of the conditioned sea water, and sea water, and
the anodic reaction cell comprises a third aqueous solution including the anodic products of electrochemical separation of the conditioned sea water, and deionised water.

When used in desalination, the processing unit of the invention has the potential to produce brackish or potable water dependent upon the current applied to the first aqueous solution. The separation of the ions from this solution, and their migration to the cathodic and anodic reaction cells leaves a first aqueous solution which has a reduced ion content, or may even have been effectively "deionised". The desalination unit of the invention may therefore be used in arid coastal regions to produce potable water for use in irrigation or as drinking water.

As used herein, the term "brackish" is intended to refer to water containing between 0.5 and 30 g/L of salts. Sea water would typically contain around 35 g/L of salts and water for human consumption typically up to a maximum of 2500 µS/cm of salts (approximately 1,700 parts per million). Potable water is generally regarded as having the following desired and permitted maximum concentrations of magnesium calcium chloride and sulphate.

| Substance | Desired Maximum Concentration in mg/L | Permitted Maximum Concentration in mg/L |
|---|---|---|
| Total dissolved solids | 500 | 1500 |
| Magnesium | 30 | 150 |
| Calcium | 75 | 200 |
| Chloride | 20 | 60 |
| Sulphate | 200 | 400 |

The processing unit described herein is appropriate to produce brackish or potable water as defined.

In a third aspect of the invention there is provided a greenhouse gas sequestration unit comprising:
a conditioning cell in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises an ion-containing first aqueous solution,
the cathodic reaction cell comprises a second aqueous solution including the cathodic products of electrochemical separation of the first aqueous solution and micronised greenhouse gases, and
the anodic reaction cell comprises a third aqueous solution including the anodic products of electrochemical separation of the first aqueous solution.

The basic principle of the GHG sequestration unit of the invention is to provide a unit which can use an electrochemical process to prepare and convert ion-containing aqueous solutions, such as sea water, to act as long term carriers of green house gases. The units of the invention have been found to sequester up to 50 tonnes of GHG per day, around 1600 tonnes per annum.

The units of the invention provide a solution to GHG sequestration that differs from other ocean based CCS approaches in that it can be used to remediate the GHG at the source of the emissions using simple starting materials such as brackish or sea water. The unit can then be used to neutralise the GHG by combining them to form salts such as carbonates, bicarbonates, sulphate and nitrogen compounds before, if desired, returning the products harmlessly back to the environment. For instance, in sea water based processes the sea water and products of sequestration may be returned to the sea. In many instances, it is sea water that is used as it contains an appropriate selection of minerals for the electrochemical process and removes the need for any further chemical additives.

It has been found that the products of sequestration produced in the invention are particularly stable, when they are released into the sea the carbonates, bicarbonates, sulfurous and nitrous salts act to rebalance the salt content of the sea as the carbonated salts slowly precipitate out and settle on the sea floor. This can be beneficial to flora and fauna.

In a fourth aspect of the invention, there is provided the use of a processing unit according to the first aspect of the inventions in desalination and/or greenhouse gas sequestration.

A fifth aspect of the invention provides a method of water or gas processing comprising the steps of:
a) providing an ion-containing first aqueous solution in an electrochemical separation cell,
b) separating the ions into cathodic and anodic products using electrolysis,
c) transferring the cathodic products to the cathodic reaction cell and the anodic products to the anodic reaction cell,
d) contacting the cathodic products of electrochemical separation of the first aqueous solution with water to form a second aqueous solution and salts of the cathodic products,
e) contacting the anodic products of electrochemical separation of the first aqueous solution with water to form a third aqueous solution,
f) releasing the treated first aqueous solution from the processing unit,
g) releasing the second aqueous solution and salts of the cathodic products from the processing unit, and
h) releasing the third aqueous solution from the processing unit.

In view of the above method it is clear that the processing units of the invention may be used in continuous flow or batch processes as it is possible to offer a continuous flow of water to provide for the first, second and third aqueous solutions; so that the products of the separation, cathodic reaction, and anodic reaction cells may all be continuously discharged in a flow process. Alternatively, a batch process may be preferred, with periodic discharge of products and refilling of the unit with fresh materials to be processed. In many instances, a continuous flow configuration will be adopted.

The inventive method may comprise the additional step of forming the first aqueous solution from water which has been passed through a conditioning cell, in use the conditioning cell neutralises the organic and biological media in the water so that it does not foul the separation cell.

Once separation, and transfer of the cathodic and anodic products to the cathodic and anodic reaction cells has occurred, the level of ions in the first aqueous solution will be significantly reduced. As such, the first aqueous solution may be released from the processing unit as potable or brackish water. It is possible to control the level of separation and hence removal of ions from the first aqueous solution by controlling the current (DC current) applied to the electrochemical cell. As such, if potable water is required, a greater current can be applied to the separation cell, and more ions removed. The ability to control the product of the separation cell provides for the use of the invention in desalination applications, where potable water can be produced from otherwise undrinkable water sources. However, even where near total removal of ions from the first aqueous solution is required, the currents needed to produce this result are low in comparison to other electrochemical ion separation techniques. Typically, the currents used would be in the range 5 - 30 Amps, often 10 - 25 Amps, or 15 - 25 Amps.

Some examples of the electrochemical reactions which may occur in the electrochemical separation cell include:
**Cathode:**

   Na⁺ + 1e- → Na + H₂O → NaOH + ½H₂

   Mg²⁺ + 2e- → Mg + 2H₂O → Mg(OH)₂ + H₂

   Ca²⁺ + 2e- → Ca + 2H₂O → Ca(OH)₂ + H₂

   K⁺ + 1e- → K + H₂O → KOH + ½H₂
**Anode:**
   In acid media:

      SO₄²⁻ - 2e- + H₂O → H₂SO₄ + ½O₂
   In acid media:

      2Cl⁻ - 2e- + [H₂SO₄] → Cl₂
   In alkaline media:

      Cl₂ + 2 NaOH → NaCl + NaOCl + H₂O

As can be seen from the reaction scheme above, sodium hypochlorite is one of the possible products of the reaction of the chlorine gas, and represents another potentially useful product of the process of the invention, that, if desired, can be collected and used. The sodium hypochlorite may be a simple by-product of reaction or the system parameters may be configured, as would be known by the person skilled in the art, specifically to produce this product whether for use at the site of the processing unit, or sale.

It may be desirable to filter the water released from the separation cell to remove organic and/or biological media. This may improve the suitability of the water for, for instance, potable uses. If a filtration step is required, known techniques will be used, such as carbon filtration.

The cathodic products of reaction may be neutralised in the cathodic reaction cell or proximal to the cathode in the electrochemical separation cell. Often neutralisation will occur proximal to, or at, the cathode of the separation cell.

The method of the invention may also include the additional step of contacting greenhouse gases with water to form the second aqueous solution. Contacting may often occur in the cathodic reaction cell or proximal to the cathode in the electrochemical separation cell, by proximal is often meant in the part of the separation cell between the cathode and the cation selective membrane.

Where this additional component is present the salts formed in the cathodic reaction cell will be salts of the cathodic products of separation of the first aqueous solution and salts of the cations and anions formed by dissolution of the green house gases. Ions formed from the dissolution of the greenhouse gases may also be present in the second aqueous solution. Where this step is present, the gas processing is greenhouse gas sequestration. As can be seen, greenhouse gas processing may be carried out in conjunction with desalination of the water from the main and/or secondary stream. Alternatively, the main and/or secondary stream may not be sea water, in which case, the method of the fifth aspect of the invention becomes a greenhouse gas sequestration technique.

In some examples of the invention the greenhouse gases will be micronised. Typically micronisation will be prior to contact with water. As used herein the term "micronised" is intended mean that the gas stream is treated provide gas bubbles which are only a few microns in diameter, for instance less than 5 µM in diameter, possibly in the range 1 - 5 µM, or 1 - 3 µM. Alternatively, the gas bubbles may be of the nanometer scale, for instance of size in the range 200 nm - 1000 nm, on occasion 400 nm - 800 nm, in some instances 500 nm - 700 nm.

Micronisation will typically occur in the cathodic reaction cell, to ensure that the gas bubbles do not have the opportunity to coalesce prior to dissolution into the second aqueous solution and salt formation. However, micronisation may be applied to the GHG at any point prior to dissolution. Micronisation of the GHG is generally desirable as the larger surface area of gas available for reaction increases reaction and solubilisation times. It has been found that micronisation of the GHG can improve the absorption of the gases into the second aqueous solution and subsequent reaction by nearly 20%, in terms of GHG reaction within the vessel and hence GHG which is not lost to the environment.

The term "greenhouse gas" or "GHG" is generally well understood to mean any gas that when present in the atmosphere absorbs and emits radiation, particularly in the thermal infra red range. Such gases include water vapour, carbon dioxide, methane, oxides of sulfur (such as SOₓ) and oxides of nitrogen (such as NOₓ). The method of the fifth aspect of the invention is particularly intended for use with GHG's of the type emitted from power stations, particularly fossil fuel burning power stations, and by heavy industry. Such GHG's will often include carbon monoxide, carbon dioxide, SOₓ, N₂O and NOₓ. The SOₓ may often be selected from one or more of sulfur monoxide, sulfur dioxide and sulfur trioxide. The NOₓ may often be selected from one or more of nitric oxide and nitrogen dioxide.

In some examples of the invention, the salts of the cathodic products include the carbonates, hydrogen carbonates, chlorides, sulfates and/or hydrates of metals selected from sodium, calcium, potassium and magnesium. The salts present will be dependent upon the ions present in the first aqueous solution and formed by dissolution of the GHG's if present. The ions to be found in the first aqueous solution are in turn dependent upon the source of water selected for the main stream. Typically, where the main stream is sea water, the salts of the cathodic products will be as described above. Often the salts produced will include carbonates such as sodium or calcium carbonate; hydrogen carbonates such as sodium hydrogen carbonate; and sulfates such as sodium or potassium sulfate. Where GHG sequestration forms part of the inventive method, acids such as carbonic acid may also be present.

At the cathode of the separation cell, or in the cathodic reaction cell, the salts of the cathodic products of separation (and optionally the GHG's) are generally produced in a two stage process. In a first stage the cathodic products of separation (and optionally the GHG's) dissolve to form acidic compounds such as carbonic acid, sulfur and nitrogen containing acid compounds. A current may then be applied in this cell to facilitate the formation of salts. For instance, for the cases of carbon dioxide sequestration, the reaction mechanism would be:

1- CO₂ + H₂O (from the second aqueous solution) ⇄ H₂CO₃ (aq)

2- H₂CO₃ + 2Ca²⁻ ⇄ CaCO₃ + Ca(HCO₃)₂ + 2H₂O at pH<10.25 (soluble)

or

H₂CO₃ + Ca²⁻ → CaCO₃ + H₂ at pH>10.25 (insoluble)

When the ratio of MCO₃/MHCO₃ is equal to an average of 0.81 at the stated pH range, Calcium and Magnesium Carbonate (i.e. M = Ca or Mg) will generally remain soluble in solution.

For sulfur dioxide sequestration salt formation would often be in accordance with the equation below:

1- SO₂ + H₂O → H₂SO₃ (aq)

2- SO₃²⁻(aq) + H₂O → SO₄²⁻(aq) + 2H⁺(aq) + 2e⁻

3- H₂SO₃+ catalyst [e.g. NO₂] + 2NaOH - Na₂SO₄ + 2H₂O

When the MSO₄ concentration in the cathodic reaction cell/second aqueous solution is equal to or less than 2.4kg/m³ of water at a temperature of 20 °C or more, it has been observed that CaSO₄ (i.e. where M = Ca) will generally remain soluble in solution. For cooler water, the solubility factor has to be considered.

Where the current applied to the separation cell and the rate of addition of the GHG to the cathodic reaction cell are optimal, a neutral media of including compounds selected from carbonates, bicarbonates, sulphates and nitrogen stable salts will be produced and the pH will be approximately 7.

In some examples of the invention, the nitrogen containing compounds, in particular the NOₓ, will be reduced and destroyed by processes similar to those described in US patent number 5,306,400 to Bradtec Ltd. Conversion will typically be to water, nitrogen and oxygen as described in US patent number 3,542,657. An illustrative process, describing the destruction of nitrates in bipolar cells is shown below:
- Stage 1: At the cathode of the cathodic reaction cell, the nitrate is reduced to ammonia:

   HNO₃ + 8e- + 8H⁺ → NH₃ + 3H₂O
- Stage 2: At the anode of the cathodic reaction cell, ammonia is oxidized to nitrogen either directly:

   2NH₃ → N₂ + 6H⁺ + 6e-

At lower pH the nitrate destruction process is relatively very slow, allowing the reduction of NOx to nitrogen and oxygen to occur. Often, in prior described processes, strong sodium hydroxide is present, forcing a fast reaction and the production of some ammonia. This was not the case in this system.

As such, the nitrogen containing GHG's and, in some instances, cathodic products of separation, may be converted not to salts, but instead to gases (nitrogen or oxygen) and/or to water. The gases will be released from the cell and may be collected, dried and purified as appropriate for their intended use. As both nitrogen and oxygen gas are valuable commercial products, these will often be utilised by the user of the processing unit or sold.

Where the nitrogen containing compounds are not destroyed, for instance where nitrates are not formed, typical reactions in the cathodic reaction cell include:

1- 2NO + O₂ → 2NO₂

2- 3NO₂ + H₂O → NO + 2HNO₃

Typically the salts released will be in soluble form, in particular where the salts are carbonates and hydrogen carbonates. For release in soluble form, the salts will be water soluble, and the discharge of the salts of the cathodic products and optionally GHG's will be with the water forming the second aqueous solution resulting in the discharge of a salt containing solution from the cathodic reaction cell. In particular, magnesium and calcium carbonates will typically remain in solution, without precipitation occurring.

The cation and anion balance in the cathodic reaction cell is complex, and it is desirable where possible to form a neutral salt-containing solution for discharge. However, whether neutralisation occurs depends upon, for instance, the concentration of positive and negative ions in the water forming the second aqueous solution; the concentration of cations transferred from the separation cell (which itself depends upon the concentration of ions in the first aqueous solution and the current applied); and the concentration of ions from the GHG present.

For this reason, it is of particular advantage to be able to control the concentration of cations being transferred from the separation cell, as such control can act as a method for controlling the pH of the second aqueous solution which at the time of release from the cathodic reaction cell is advantageously of a similar pH to the water body into which the second aqueous solution will be discharged. This pH can be controlled, in part, by controlling the current applied to the separation cell.

In addition, where the pH of the second aqueous solution is too high, hydrogen ions can be produced in the cathodic reaction chamber, by reaction of alkaline metal cations present in solution with water, providing a further method of controlling the pH of this solution. Further, the production of hydrogen ions, and hence hydrogen gas can offer a route to a commercially useful by-product, which may be used either on site by the user of the processing unit, or sold to generate revenue offsetting running and installation costs, for instance, hydrogen gas can be reacted with chlorine gas to produce hydrochloric acid, or used to power hydrogen cells producing electricity.

Another method of controlling the pH includes controlling the concentration of GHG being dissolved in the second aqueous solution. This can be controlled either by modification to the volume of water entering the cathodic reaction cell via the secondary stream, or to the amount of GHG being introduced to the cell.

Using the above methods, the products of the cathodic reaction chamber can be controlled, ensuring that the product released from the chamber comply with local environmental agency regulations.

In the case of a variable current being applied across the separation cell, and a fixed GHG feed rate: at higher current densities more alkaline ions will generally be present in the cathodic reaction cell, resulting in a higher pH. Conversely, at a lower current density more acidic ions will generally be present in the cathodic reaction cell, resulting in a lower pH.

In the case of a fixed current being applied across the separation cell, and a variable GHG feed rate: at higher GHG feed rate more acidic ions will generally be present in the cathodic reaction cell, resulting in a lower pH. At a lower feed rate more alkaline ions will generally be present in the cathodic reaction cell, resulting in a higher pH.

In some examples of the invention, the release of the second aqueous solution and salts of the cathodic products (with or without the salts of the dissolution of GHG's), from the processing unit will be to the sea. This is often preferred if the sea is proximal to the treatment site. In such instances, it is advantageous if the pH of the second aqueous solution be in the range 7.5 - 8.5, in some instances in the range 8.0, 8.2 or 8.35 - 8.45 (i.e. around the pH of sea water). Alternatively, release may be into another water body, such as a lake or river, or further treatment may be applied to the products released from the cathodic reaction cell. Such further treatment may include, for instance, reclaiming of the salts for further utilisation or sale, leaving potable or brackish water for discharge.

The ability to control the pH of the solutions released from the processing unit represents a key difference between the invention and the prior art, as prior art methods for GHG sequestration in particular often produce highly alkaline solutions, of pH 9 or more, the ability to ensure that the pH of the solutions released from the processing unit is similar to the water body into which it is being released significantly reduces the environmental impact of the release of these products.

Discharge of the second aqueous solution including the salts of the cathodic products and optionally GHG sequestration is not only environmentally benign, but can also have a positive benefit on the flora and fauna of the surrounding water bodies, as the salts can offer beneficial nutrients, and the solution as a whole can be applied to help balance the pH of the water body, for instance where this has fallen too low as a result of pollution. In such instances, the pH of the second aqueous solution could be controlled to help restore the pH of the water body back to a more "natural" pH, helping to undo the damage caused by pollution, having a positive impact upon the environment.

The anodic products of electrochemical separation of the first aqueous solution will often include chloride or sulfate, although other negatively charged ions may also be present. Where chloride is present, this will often form chlorine gas at the anode of the electrochemical separation cell. This will then typically be transferred to the anodic reaction cell and "released" from the processing unit in this form. The chlorine gas will typically be collected and after any purification or drying that is necessary may be used either on site by the user of the inventive method, or sold for third party use.

Sulfates may be neutralised on the anode of the separation cell, or in the anodic reaction cell. After transfer to the anodic reaction cell any remaining sulfate anions are converted into sulfuric acid and released from the processing unit in this form. Conversion to sulfuric acid in the anodic reaction cell is optionally facilitated by acidification of the third aqueous solution, generally acidification will be with sulfuric acid.

The concentration of the sulfuric acid produced may be controlled by adjusting the volume of the third aqueous solution, or in other words the amount of the tertiary stream passed into the anodic reaction cell. The concentration of the sulfuric acid may be further modified after it has been released from the processing unit by, for instance, distillation or evaporation. Where the processing unit is situated at a power station or heavy industrial plant, waste hot water or other heat source could be used to provide the heat necessary to achieve this additional concentration. Further, the evaporate/distillate could be reused as the water for the tertiary stream/third aqueous solution; thereby further improving the efficiency of the system. Where produced, the concentrated sulfuric acid may be used to dry the chlorine, improving the quality of this product for resale. The sulfuric acid may then be used, as with the chlorine gas, by the user of the method or sold for third party use.

As such, the chlorine and sulfuric acid may be regarded as useful commercial by-products of the separation of the first aqueous solution. This is particularly as the processing unit of the invention produces chlorine gas and sulfuric acid at purities comparable to many commercial sources of these products.

Alternatively, it may be that the method of the invention is specifically applied in order to generate these products; for instance, it may be desirable to apply the inventive method at the manufacturing site of a chlorine or sulfuric acid intensive process. If, for instance, sea water were readily available at such a site, and could form the first aqueous solution, this would provide a low cost method of producing the components of the chemical process. Such a process has a particular advantage that the by-products of chlorine gas or sulfuric acid production (water, non-toxic salts) can be released into the environment without employing expensive disposal methods. In addition, the starting materials for the process are produced on-site, reducing the overall environmental impact of the chemical process by removing the need to transport starting materials to the site, and hence the carbon-impact of the process overall.

In a sixth aspect of the invention, there is provided a desalination method comprising the steps of:
a) passing sea water through a conditioning cell,
b) providing the conditioned sea water to an electrochemical separation cell,
c) separating the conditioned sea water into cathodic and anodic products using electrolysis,
d) transferring the cathodic products to the cathodic reaction cell and the anodic products to the anodic reaction cell,
e) contacting the cathodic products of electrochemical separation of the conditioned sea water with sea water to form a second aqueous solution and salts of the cathodic products,
f) contacting the anodic products of electrochemical separation of the first aqueous solution with deionised water to form a third aqueous solution,
g) releasing the electrolysed conditioned sea water from the processing unit as brackish or potable water,
h) releasing the second aqueous solution and salts of the cathodic products from the processing unit, and
i) releasing the third aqueous solution from the processing unit.

The application of the inventive method to desalination has the advantage that the products of desalination may be collected, becoming a commercial commodity. Alternatively, where they are not collected, the products are non-toxic and may be safely returned to the sea without harm to the environment. For instance, the desalination method of the invention will often produce chlorine gas and sulfuric acid, as chlorides and sulfurous compounds are extracted from the first aqueous solution as anodic products of separation. These products may be collected and sold, helping to offset the costs of installing and running the desalination unit. In addition, the salts formed in the cathodic reaction cell may be collected and sold if desired, alternatively, as they are non-toxic and do not harm the environment they may simply be discharged from the processing unit.

Additionally and alternatively there is provided a seventh aspect of the invention, a method of greenhouse gas sequestration comprising the steps of:
a) passing water through a conditioning cell,
b) providing an ion-containing first aqueous solution in an electrochemical separation cell,
c) separating the ions into cathodic and anodic products using electrolysis,
d) transferring the cathodic products to the cathodic reaction cell and the anodic products to the anodic reaction cell,
e) contacting micronised greenhouse gases and the cathodic products of electrochemical separation of the first aqueous solution with water to form a second aqueous solution and salts of the cathodic products,
f) contacting the anodic products of electrochemical separation of the first aqueous solution with water to form a third aqueous solution,
g) releasing the treated first aqueous solution from the processing unit,
h) releasing the second aqueous solution and salts of the greenhouse gases and cathodic products from the processing unit, and
i) releasing the third aqueous solution from the processing unit.

Such a method, and the methods described above, has the advantage that it may be applied at the site of GHG emission, for instance, the processing unit of the invention may be installed at the site of the power station and used to capture the flue gases emitted. The GHG's are therefore sequestered at source. In addition, the products of sequestration are non-toxic salts which may be safely released from the processing unit into a local water body without environmental concern. Further, use of the inventive method, will produce useful by-products, as described above, which may be collected and sold, offsetting the cost of installing and running the processing unit of the invention.

In an eighth aspect of the invention there is therefore provided, the use of a method according to the fifth aspect of the in one or more applications selected from desalination and greenhouse gas sequestration.

The invention offers a wide range of advantages, many of which have been illustrated above; however, one key advantage of the invention is the ability to utilise materials which are at hand, removing the need to transport materials to the site of operation, hence reducing the overall cost of operation of the processing units, and the environmental impact of the units/process in terms of carbon footprint. For instance, It is known to use commercial alkaline metal salts as a source to stabilise the end products of sequestration. However, in other CCS techniques, this may involve purchase, transport, storage and handling of such materials. This is not required by the invention as the stabilisation materials are generated *in situ.* For instance, the invention may use seawater as a source of the required cations and at the same time produce valuable by-products which can offset or cover the running cost of the unit, offering a commercially important way of recouping both running and installation costs.

Optionally, the system may be controlled by computer, programmed to monitor conditions such as pH, temperature and electrolyte concentration in each of the electrochemical separation cell, the cathodic reaction cell and the anodic reaction cell and adjust the currents flowing through the system, and feed rates of each of the main, secondary and tertiary streams, any GHG addition and other factors as appropriate.

Unless otherwise stated each of the integers described in the invention may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims.

Unless otherwise stated all percentages appearing in the specification are percentages by weight of the composition being described. In addition, unless otherwise stated, all numerical values appearing in this application are to be understood as being modified by the term "about".

### Brief description of the drawings

In order that the present invention may be more readily understood, it will be described further with reference to the figures and to the specific examples hereinafter.
Figure 1 is a flow diagram illustrating a processing unit in accordance with the invention;
Figure 2 is a flow diagram illustrating the integration of the processing unit of Figure 1 into a production plant for use in greenhouse gas sequestration; and
Figure 3 is a graphical comparison of pH change of artificial seawater in the processing unit of the invention over a range of currents applied across the separation cell, at a GHG feed rate of 2.7 L/min⁻¹, main stream feed rate of 100 L/hr, and a blending rate of 60 L/hr. The GHG's were introduced at a current of 5 Amps. The upper line represents experimental observation using the processing unit of the invention and the lower line the calculated pH based upon laboratory tests.

### Description

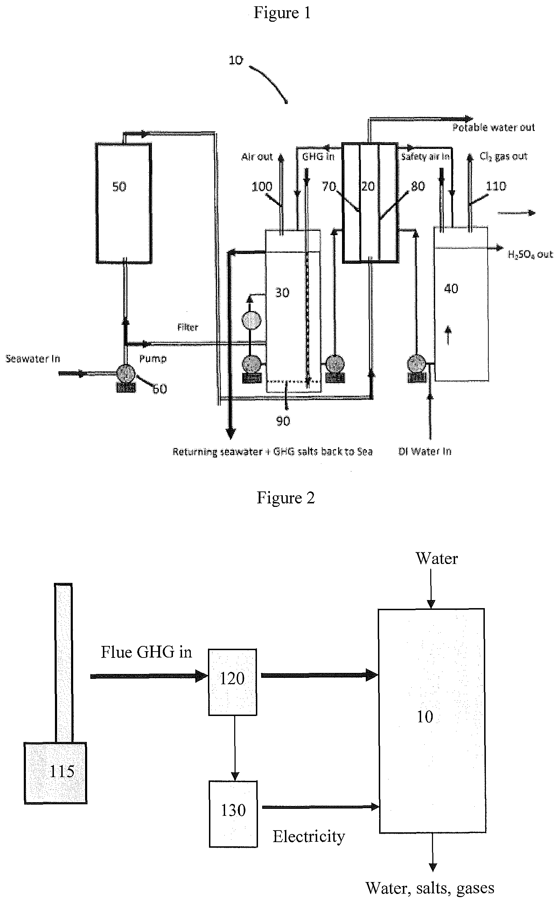

Figure 1 is a flow diagram showing a processing unit 10 of the invention. The processing unit 10 includes an electrochemical separation cell 20, cathodic reaction cell 30, anodic reaction cell 40 and conditioning cell 50. The processing unit 10 illustrated is configured for GHG sequestration and desalination of sea water.

In this example sea water enters the processing unit 10 as a single stream and passes through a pump 60. The sea water is then split into two streams, a main stream (70% of the sea water) and a secondary stream (30% of the sea water). The main stream is passed through the conditioning cell 50 to neutralise any organic and biological media, and then into the separation cell 20. In this example, the secondary stream is filtered (filter not shown) prior to passing into the cathodic reaction cell 40.

In this example the physical dimensions of the separation cell are 45cm x 37cm x 2.2cm (width x height x depth). The anodic and cathodic reaction cells in this example are of the same dimensions which are 45cm x 37cm x 1.7cm (width x height x depth).

The water from the main stream forms a first aqueous solution in the separation cell 20, the first aqueous solution is electrolysed using a DC current of 25 Amp/hr producing cathodic reaction products (cations) and anodic reaction products (anions) which migrate towards the cathode and anode (not shown) respectively. This migration causes the cathodic reaction products to pass through a cation selective membrane 70 and into the cathodic reaction cell 30, and the anodic reaction products to pass through an anion selective membrane 80 and into the anodic reaction cell 40. The first aqueous solution is thus depleted of ions, and, in this embodiment, is released from the separation cell 20 as potable water.

In the cathodic reaction cell 30, the cathodic reaction products form a second aqueous solution with the water of the secondary stream. The cathodic reaction cell 30 comprises a cathode and an anode (not shown). A gas stream containing GHG's is pumped into the cathodic reaction cell where, in this configuration, they are micronised by passing through a fine mesh grid 90 (10-20 micron pores) positioned at the base of the cathodic reaction cell 30. In this example the GHG's are CO₂, SO₂ and N₂O. The GHG's then dissolve in the secondary aqueous solution and salt formation occurs. Unreacted gases (such as nitrogen) pass through the solution as bubbles and exit the cathodic reaction cell 30 through a gas outlet 100.

In this example, water is also returned from the cathodic reaction cell 30 to the separation cell 20. This is advantageous as such water contains acids formed by the dissolution of greenhouse gases but is substantially free from metal ions as these have formed salts and been discharged. These acids will then be recycled to the cathode reaction cell where they are mixed with further GHG's for sequestration and water from the secondary reaction stream.

The anodic products of reaction migrate to the anodic reaction cell 40. In this example these include chloride and sulfate. The chloride in this example begins to form at the anode of the separation cell 20, however, most of the chloride forms chlorine gas in the anodic reaction cell 40. Chlorine gas forms in the anodic reaction cell 40 as a result of the presence of the third aqueous solution, which in this embodiment is deionised water acidified with sulfuric acid to pH 3-4. Contact of the chlorine with the acid neutralises the chloride anion and causes formation of the chlorine gas molecule. The chlorine gas then comes out of solution and exits the anodic reaction cell 40 through a gas outlet 110. After collection the chlorine is dried by bubbling through sulphuric acid and compressed.

The sulfates are neutralised on the anode of the separation cell 20. After transfer to the anodic reaction cell 40 any remaining sulfate anions are converted into sulfuric acid and released from the processing unit 10. The pH of this solution is around 1 or 2. After release from the processing unit 10, the sulfuric acid is concentrated using distillation methods, in this example the water removed during concentration is recycled as the deionised water forming the third aqueous solution. Overall, acid concentration is controlled in this example by removal of the third aqueous solution from the anodic reaction cell using a pump and feed system returning the ions to the separation cell. This method may be applied generally.

Figure 2 shows the integration of the processing unit 10 of Figure 1 into an electricity or other production plant, such as a heavy chemical production plant. The processing unit 10 of the invention is connected to the GHG flue 115 via a heat exchanger 120, which cools the gases, provides a source of heat for distillation/concentration of the collected sulfuric acid and runs a steam turbine 130 converting the heat into electricity which can be used to power the pumps and electrolytic processes of the invention. By harvesting the by-products of the production plants processes in this way, the processing unit 10 of the invention can be configured to require little or no additional power, minimising the running costs of the unit and the environmental impact of the product.

### Examples

### Example 1

This test of the processing unit of the invention was intended to illustrate the ability of the processing unit of the invention to control the pH of the secondary aqueous solution released from the cathodic reaction cell.

### Method:

Artificial sea water was prepared by dissolving commercial sea salt in Bristol tap water at a concentration of 1362.5 g / 1000 L. The mixture was allowed to equilibrate over 8 days with stirring for approximately 2 hours daily to mature and rebalance the seawater with surrounding atmosphere. Simulated seawater was fed through the system as in the experimental set parameters.

A pure micronized stream of CO₂ gas (from BOC) was prepared by pumping the CO₂ through a 10 - 20 micron micro mash (pores) grid of ∼ 900 cm². The grid was positioned 5 cm above the cathodic reaction cell.

Base was passed through the simulated secondary sea water stream (cathodic reaction cell) until the pH dropped from 7.25 to pH 4.7. The simulated seawater saturated with CO₂ was pumped through the cathode compartment in the separation cell of the processing unit. Under the influence of DC current, cationic species from main feed stream migrated through the cationic selective membrane neutralising the acids in the cathodic reaction cell (carbonic acid) formed by CO₂ forming a balanced mixture of carbonated and bi-carbonated metal species. By applying DC current to allow the pH to increase to less than pH 10.25, in this case to pH of up to ∼ 8.3. The equilibrium balance between CO₃ and HCO₃ species at this pH was maintained.

Data was collected at 0.5 hour intervals to evaluate system stabilisation.

### System Parameters:

| | |
|---|---|
| Separation Cell DC Current | = 25 Amp/hr |
| Rate of Simulated sea water feed in | = 100 L/hr |
| Carrier simulated sea water in | = 60 L/hr |
| Simulated water pH | = 7.25 |
| Simulated sea water + GHG return | = 60 L/hr |
| Total active surface area sep. cell | = 3330 cm² |
| Micronized GHG CO₂ feed rate at 1m long pathway | = 120 L/hr |

A conditioning cell was present.

### Results:

The results are shown in Table 1.

**Table 1: Secondary stream plus GHG soluble salts in carbonate/bicarbonate form**

| **Time Hours** | **Waste water out pH** | **Waste water out Conductivity** | **Waste water + GHG out TDS* ppm** |
|---|---|---|---|
| 0.0 | 7.25 | ---- | ---- |
| 0.5 | 4.7 | ---- | ---- |
| 1.0 | 6.10 | 1430 | 3820 |
| 1.5 | 6.21 | 1520 | 3520 |
| 2.0 | 8.31 | 1460 | 3330 |
| 3.0 | 8.31 | 1460 | 3330 |
| 4.0 | 8.31 | 1460 | 3330 |

| | | | |
|---|---|---|---|
| * Total Dissolved Solids | | | |

It can be seen from the above that at a current flow in the separation cell of 25 Amp, the processing unit required only 2.0 hours to achieve equilibrium to consistent performance under trial conditions. After this time, the pH of the secondary aqueous solution is higher than that of the original solution, showing a clear ability to control the pH of the second aqueous solution.

The DC voltage was completely stable during the operation indicating the absence of any clogging or precipitation in the cells in spite of the presence calcium and magnesium and some bio and organic ions in the simulated seawater. No CO₂ was evolved from the exit cathode tank chimney flow meter, indicating complete capture of the GHG in the second aqueous solution.

### Example 2

This test of the processing unit of the invention was intended to illustrate the advantages of micronising the GHG. Micronisation was found to stabilise the pH of the second cathodic reaction cell, allowing a product of controlled pH to be released from the processing unit.

### Method:

Artificial sea water was prepared as described above, by dissolving commercial sea salt in Bristol tap water. The CO₂ gas was micronised as described above, and the pH of the second aqueous solution lowered using the method of Example 1, although in this case to pH 2.03.

### System Parameters:

| | |
|---|---|
| Separation Cell DC Current | = 15 Amp/hr |
| Rate of Simulated sea water feed in | = 100 L/hr |
| Total volume of resident water in cathodic reaction cell | = 107.36 L |
| Carrier simulated sea water in | = 40 L/hr |
| Simulated water pH | = 7.25 |
| Simulated sea water + GHG return | = 40 L/hr |
| Total active surface area sep. cell | = 3330 cm² |
| Micronized GHG CO₂ feed rate at 1m long pathway | = 120 L/hr |

A conditioning cell was present.

### Results:

The results are shown in Table 2.

**Table 2: Secondary stream plus GHG soluble salts in carbonate/bicarbonate form**

| **Time-Hours (GHG micronized)** | **pH** | **EC** | **Secondary stream out TDS* g/hr** |
|---|---|---|---|
| 0.0 | 2.03 | 3.11 | 82.4 |
| 0.5 | 4.05 | 3.30 | 86.8 |
| 1.0 | 4.85 | 3.33 | 92.0 |
| 1.5 | 5.20 | 3.58 | 100.0 |
| 2.0 | 5.47 | 3.94 | 110.4 |
| 2.5 | 5.65 | 4.26 | 119.2 |
| 3.0 | 5.79 | 4.59 | 129.2 |
| 3.5 | 5.93 | 4.94 | 138.4 |
| 4.0 | 6.81 | 4.94 | 138.4 |

| **Time hours (GHG not micronized)** | **pH** | **EC** | **Secondary stream out TDS* g/hr** |
|---|---|---|---|
| 5.0 | 8.5 | 4.51 | 125.3 |

| | | | |
|---|---|---|---|
| * Total Dissolved Solids | | | |

At 15 Amp DC current applied across the separation cell, the processing unit required 4.0 hours to achieve equilibrium in the cathodic reaction cell so that consistent performance was observed under trial conditions. The DC voltage was completely stable during operation indicated the absence of any clogging or precipitation in the cells in spite of the presence calcium and magnesium and some bio and organic matter in the simulated seawater. No CO₂ was evolved from the exit to the cathodic reaction cell, indicating complete dissolution.

To study the effect of micronization, CO₂ was fed through the micronized grid during the first 4 hours, then the micronized grid was replaced by a gas feeding pipe of cross-sectional area 1.57 cm², and CO₂ piped into the cathodic reaction cell. A CO₂ gas outlet flow meter indicated the escape of 21.6 L CO₂ without reaction with the second aqueous solution. At the same time the return pH of the water released from the cathodic reaction cell increased to 8.5, an indication of the presence of a balanced excess of alkaline ions causing the observed pH increase.

### Example 3

This test of the processing unit of the invention illustrates the ability of the separation cell to extract ions from the first aqueous solution, and shows the levels of ions often available as products of reaction.

### Method:

A further 2 m³ of artificial sea water was prepared as described in Example 1, and the tests repeated under the following system parameters:

| | |
|---|---|
| Separation Cell DC current | = 15 Amp/hr |
| Rate of Simulated sea water feed in | = 100L/hr |
| Carrier simulated sea water in | = 40L/hr |
| Carrier simulated sea water return | = 40L/hr |
| Total active surface area separation cell | = 3330 cm² |
| Micronized GHG CO₂ feed rate at 1m long pathway | = 120 L/hr |

A conditioning cell was present.

### Results:

The results of the electrochemical separation of the first aqueous solution are shown in Table 3.

**Table 3: Results after 2.0 hours***

| **Element** | **Level in Main Stream (mg/hr)** | **Level released from processing unit *via* separation cell (mg/hr)** | **Reduction in Main Stream ion level (15 Amp mg/hr)** | **Additional ions sourced from second or third aqueous solutions (mg/hr)** | **Total (mg/hr)** |
|---|---|---|---|---|---|
| Na extracted from first aqueous solution | 61900 | 39300 | 22600 | 24760 (from second aqueous solution/cathodic reaction cell) | 47360 |
| Ca extracted from first aqueous solution | 10800 | 8200 | 2600 | 4320 (from second aqueous solution/cathod ic reaction cell) | 6920 |
| K extracted from first aqueous solution | 331 | 200 | 131 | 132.4 (from second aqueous solution/cathod ic reaction cell) | 264.4 |
| Cl extracted from first aqueous solution | 77500 | 63400 | 14100 | 31000 (from third aqueous solution/anodic reaction cell) | 45100 (as chlorine gas) |
| SO₄ extracted from first aqueous solution | 3490 | 3150 | 340 | 1396 (from third aqueous solution/anodic reaction cell) | 1736 (as H₂SO₄) |
| pH | 7.10 | 6.18 | | | |
| Conductivity | 2610 | 2060 | | | |
| Alkalinity as CaCO₃ | 230 | 112 | | | |
| Alkalinity as HCO₃ | 281 | 137 | | | |

| | | | | | |
|---|---|---|---|---|---|
| *All analysis was carried out at Gordon Sanitair laboratories in Bristol | | | | | |

In this trial the released water was analysed for major elements. The sodium, potassium and calcium represent the carbonate and bi-carbonate as well as sulphates salts. The reduction in main stream ion level in terms of extracted sodium, potassium and calcium neutralised the GHG forming its salts in the second aqueous solution and which may be released from the processing unit. Na, P, Mg and Ca soluble salts of HCO₃, CO₃, Cl, SO₄ xH₂O may be formed in various combinations.

The extracted sulphate and chlorine ions were neutralised to sulphuric acid and chlorine gas in the anodic reaction cell if not directly at the anode in the separation cell. No CO₂ evolved from the exit cathode tank chimney flow meter, indicating complete capture of the GHG.

As can be seen from the results above, a variety of products are produced in the processing unit of the invention. In particular, anionic species migrate under the influence of the DC current to the anodic reaction cell. In this test the sulphate ions were converted to sulphuric acid, concentrated and removed to promote further sulfate migration to the anodic reaction cell. The chlorine ions migrated into the acidic medium of the anodic reaction cell, and were neutralised forming chlorine gas which evolved out of the system. In this test the chlorine gas was dried and compressed in chlorine cylinders.

In this test the amount of chlorine and sulfate harvested in the anodic reaction cell corresponds to the reduction in chlorine and sulfate observed in the first aqueous solution, making it clear that the chlorine and sulfate have been obtained from this source. The amount of any of these products produced is dependent on the specific operation current density and basicity.

The quality and purity of the products of the process claimed, in particular the sulphuric acid, is dependent on the presence and concentration of other anionic species in the master feed brackish or seawater being used in processing unit of the invention.

### Example 4

The GHG sequestration and desalination abilities of the processing unit were tested using carbon dioxide, sulfur dioxide, nitrates and nitrous oxide.

Artificial sea water was prepared as in Example 1, and the test method was as set out in that example. The system parameters were as follows:

| | |
|---|---|
| Separation Cell DC current | = 5, 10, 15, 20 & 25 A/hr |
| Rate of Simulated sea water feed in main stream | = 100L/hr |
| Carrier simulated sea water in | = 60L/hr |
| Carrier simulated sea water return | = 60L/hr |
| Total active surface area separation cell | = 3330 cm² |
| Micronized GHG feed rate at 1m | |
| long pathway | = 162 L /hr |

A conditioning cell was present.

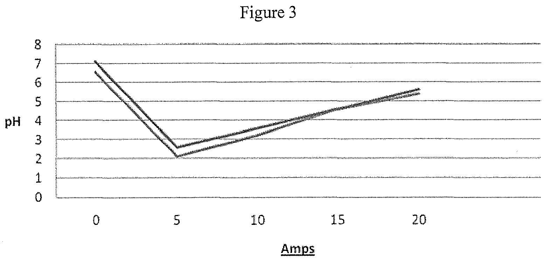

The results are shown in Tables 4, 5 and in Figure 3.

**Table 4: Production of Potable Water using the Processing unit of the invention.***

| **Description** | **Main Stream of Artificial Seawater† (mg/L)** | **First Aqueous solution released from Separation Cell^{§} (mg/L)** | **Resulting Potable Water# (mg/L)** |
|---|---|---|---|
| Alkalinity as CaCO₃ | 230 | 336 | 13 |
| Alkalinity as CaHCO₃ | 281 | 410 | 15 |
| Calcium | 108 | 130 | 70 |
| Chloride | 775 | 765 | 591 |
| Magnesium | 9.44 | 13.0 | 6.7 |
| Potassium | 3.31 | 5.25 | 1.4 |
| Sodium | 519 | 684 | 337 |
| Sulphate | 34.9 | 245.0 | 30 |
| Nitrogen Formula | 0.461 | 0.477 | 0.361 |

| | | | |
|---|---|---|---|
| *Separation Cell at 25 Amp DC current & GHGs feed rate at of 2.7 L/min⁻¹ † 100 litre volume § 25 Amps and flow rate of 60L/hr # 25 Amps and flow rate of 100L/hr | | | |

The test showed that GHG's could be captured and removed from a gas stream. Hydrogen gas was also generated.

The sequestration of the nitrogen formula were observed as following the electrochemical processes below. Specifically, NOx in the cathodic reaction cell were reduced to nitrogen and oxygen under alkaline reduction conditions:
Nitrates:

   NO₃⁻ + 3H₂O +5e- → ½N₂ + 9OH⁻ or 2NaNO₃ → 2Na⁺+N₂ +3O₂ + 2e⁻
Nitrogen Formula:

   N_{y} Oₓ + aH₂O + be- → cN₂ + dO₂
where x, y, a, b, c and d are balancing numerals

**Table 5: Nitrates & Nitrogen Formula Reduction in Separation Cell**

| | | | | |
|---|---|---|---|---|
| **Function** | **Seawater* (mg/L)** | **Resulting Potable / Brackish water* (mg/L)** | **Theoretical Seawater out§ (mg/L)** | **Actual Seawater§ (mg/L)** |
| At 20 Amp | **23/0.461** | **18/0.362** | **31.333 / 16.961** | **24.4 / 0.489** |
| Total mg/100L | **2300 / 46.1** | **1800 / 36.2** | | |
| **Loss mg/100L** | | **-500 / -990** | | |
| At 15 Amp | **23 / 0.461** | **19.9 / 0.399** | **28.167 / 00.666** | **22.9 / 0.459** |
| Total mg/100L | **2300 / 46.1** | **1990 / 39.0** | | |
| **Loss mg/100L** | | **-310 / -12.3** | | |

| | | | | |
|---|---|---|---|---|
| * Flow rate of 100 L/hr; first and second values represent the levels of nitrates (first) and nitrogen formula (second) - **Nitrates/N₂ formula** § Flow rate of 60 L/hr; first and second values represent the levels of nitrates (first) and nitrogen formula (second) - **Nitrates/N₂ formula** | | | | |

From the above it can be seen that at 20 Amps the rate of nitrate destruction is 22.13%, and the rate of nitrogen formula destruction is 97.12 %. At 15 Amps, the rate of nitrate destruction is 18.70% and the rate of nitrogen formula destruction is 31.11%

Modulation of the electrical current was shown to govern the pH of the effluent seawater (Figure 3) and to confirm that no precipitates were formed (which poses a mechanical problem in known carbon capture reactors). All of these results were conclusively demonstrated. Details of key observations and results are described below:
- **Removal of greenhouse gases:** The experiments were conducted for ca 40 minutes per run, with an influx of GHGs of 2.7 L/min⁻¹ (in approximate ratios of 1 N₂O to 2 SO₂ to 7 CO₂); thus, ca 162 L/hr of GHGs were introduced to the GHG reaction tank; no gas bubbles could be observed exiting the GHG reaction tank at any point during the experiment, indicating that that GHGs had been dissolved into the seawater.
- **Generation of seawater return:** In all experiments, the pH of the seawater return was initially decreased at the beginning of the experiment, providing direct confirmation that the GHGs were being dissolved into the seawater similarly the conductivity increased due to concentration of salts into the seawater return.
- **Modulation of pH:** Four experiments were conducted, by applying 5, 15, 20 or 25 amps through the catalysis cell. Increasing the voltage dramatically increased the pH (lowered the acidity) of the seawater return, demonstrating that modulation of the electrical current, especially in tandem with modulation of the water and GHG flow, can be used to control the acidity of effluent water (Figure 3). From Figure 3 it is clear that the observed change in pH in the field test closely correlates with the change in pH observed under laboratory conditions.
- **Generation of potable water:** The nominally potable water stream had a markedly lower conductivity (salinity) than the seawater input. It was demonstrated that this could be modulated downward by changing the voltage applied to the catalysis cell.
- **Generation of H₂:** Despite no gas bubbles flowing into the catalysis cell, a significant number of gas bubbles were generated within it and flowed out of it. These bubbles are almost certainly H₂ gas, based on the electrochemistry occurring and consistent with this, H₂ was detected in the seawater effluent.
- A Separation Cell DC Current consumption for 100L seawater was observed to be 650 W/hr⁻¹
- A seawater return (discharge of secondary aqueous solution) of 60 L/hr⁻¹ was observed
- Approximate average weight of 1L of GHG was found to be 2.067 g
- GHG feed at of 2.7 L/min⁻¹ per 40 min = 2.7 L x 40 min x 2.067 g = 223.24 g
- Sodium and Chlorine concentrations in produced Potable Water were, in this example higher than regulation. As such, the "potable" water produced in this experiment would be classified as brackish water, suitable for discharge into a water course, but not for drinking without further refinement. Simple increase of the current applied to the separation cell would remove a higher level of sodium and chloride ions. Calcium, magnesium and potassium concentration were within the legal requirement.
- At 25 Amp/hr the processing unit had successfully absorbed 162 L of GHG [223.24 g].
- The pH of effluent return seawater increased with increase of the separation cell current.
- The nitrogen containing compounds introduced to the cathodic reaction cell were reduced to nitrogen and oxygen.

### Example 5

The GHG sequestration and desalination abilities of the processing unit were tested using the flue gases from the boilers of Bristol Royal Infirmary.

Flue gases from Bristol Royal Infirmary (BRI) boilers were collected from near the base of the flue chimney, cooled through an heat exchanger/fans then pumped into the processing unit of the invention.

Bristol Royal Infirmary used cation and anion de-salination resin columns to produce the de-ionized water necessary for their boiler system. The waste eluent from the desalination resin plant was collected and used as a supply source ion-containing water for use in the main and secondary streams (first and second aqueous solutions). The desalination system concentrates, TDS averaged 3950 mg/L.

The results were assessed by Catalyst Environmental Ltd.

### System Parameters:

| | |
|---|---|
| Separation Cell DC current Density | = 78Amp |
| Rate of Simulated sea water feed in | = 100L/hr |
| Carrier simulated sea water in | = 60L/hr |
| Carrier simulated sea water return | = 60L/hr |
| Total active surface area separation cell | = 3330 cm² |
| Un-micronized GHG gases feed rate at | |
| 1m long pathway | = 720 L/hr |

A conditioning cell was present.

Table 5 below summarises the results obtained when testing the concentrations of certain pollutants in the emissions from the Boiler at Bristol Royal Infirmary, both before (Inlet) and after (Outlet) passage through the processing unit.

The purpose of the tests was to demonstrate the levels of reduction in the concentrations of certain pollutants that the processing unit could achieve.

**Table 5: Comparison of emission concentrations measured before (Inlet) and after (Outlet)**

| **Parameter /Time** | **NOx (g/m³) Inlet** | **NOx (g/m³) Outlet** | **Reduction** | **CO (mg/m³) Inlet** | **CO (mg/m³) Outlet** | **Reduction** |
|---|---|---|---|---|---|---|
| Run 1 (10:25 - 1:35) | 21.4 | 1.8 | 92% | 4.3 | 1.8 | 58% |
| Run 2 (11:50 - 3:10) | 20.0 | 1.7 | 92% | 2.8 | 2.7 | 4% |
| Run 3 (13:50-4:45) | 35.2 | 3.0 | 91% | 4.3 | 2.0 | 53% |
| Run 4 (14:55-6:25) | 32.3 | 3.0 | 91% | 3.3 | 2.5 | 24% |
| **Average** | **27.2** | **2.4** | **91%** | **3.7** | 2.3 | **39%** |

| **Parameter /Time** | **CO₂ (g/m³) Inlet** | **CO₂ (g/m³) Outlet** | **Reduction** | **SO₂ (mg/m³) Inlet** | **SO₂ (mg/m³) Outlet** | **Reduction** |
|---|---|---|---|---|---|---|
| Run 1 (10:25-1:35) | 32271 | 5469 | 83% | - | - | - |
| Run 2 (11:50-3:10) | 189164 | 19541 | 90% | - | - | - |
| Run 3 (13:50-4:45) | 43255 | 6793 | 84% | 8.2 | 3.4 | 59% |
| Run 4 (14:55-6:25) | 146414 | 15979 | 89% | 6.9 | 3.4 | 51% |
| **Average** | **102776** | **11946** | **88%** | **7.6** | **3.4** | **55%** |

As can be seen, both the NOx and CO₂ concentrations were lower after the flue gas had been passed through the processing unit by an average of 91% and 88% respectively.

It was also observed that:
- the discharged water had a pH of 8.4;
- at 0.25 to 1.0 cm height GHG bubbles, a cathodic reaction cell of 2.5 meters diameter was required to affect a complete sequestration of approximately 100 % of un-micronized GHG in the flue gases to air mixture which incorporated approximately 7 to 10 times air in the boiler Furness;
- no precipitation was observed in separation cell, the cathodic reaction cell or in the water discharged from the processing unit;
- after 2 hours operation the operating voltage dropped gradually from 19 to 14 indicating healthy electro separation and GHG combination flow;
- the current consumption was 1092 Watt/hour in the separation cell.

It should be appreciated that the processing units, methods and uses of the invention are capable of being incorporated in the form of a variety of embodiments, only a few of which have been illustrated and described above.

The present invention may also be described or defined in accordance with the following items:
1. A processing unit comprising:
   an electrochemical separation cell in fluid communication with,
   a cathodic reaction cell, and
   an anodic reaction cell;
   wherein in use:
   the separation cell comprises an ion-containing first aqueous solution,
   the cathodic reaction cell comprises a second aqueous solution including cathodic products of electrochemical separation of the first aqueous solution, and
   the anodic reaction cell comprises a third aqueous solution including anodic products of electrochemical separation of the first aqueous solution.
2. A processing unit according to item 1 additionally comprising a conditioning cell in fluid communication with the separation cell.
3. A processing unit according to item 2 wherein the first aqueous solution is formed from water which has first passed through the conditioning cell.
4. A processing unit according to any preceding item wherein the second aqueous solution is formed from water which has been filtered.
5. A processing unit according to any preceding item wherein the separation cell includes cation and anion selective membranes.
6. A processing unit according to any preceding item wherein the fluid communication between the separation cell and the cathodic and anodic reaction cells is unidirectional from the separation cell to the cathodic and anodic reaction cells.
7. A processing unit according to any preceding item wherein the first and second aqueous solutions are formed from water from the same source.
8. A processing unit according to item 7 wherein the source is sea water.
9. A processing unit according to any preceding item wherein the third aqueous solution is formed from deionised water.
10. A processing unit according to any preceding item wherein the ions of the first and/or second aqueous solutions are selected from ions found in sea water and/or solubilised greenhouse gases.
11. A processing unit according to any preceding item wherein the ions of the first and/or second aqueous solutions are selected from sodium, potassium, iron, calcium, magnesium, phosphorus, cyanide, carbonate, chloride, sulfate, sulfite, nitrate, and nitrite.
12. A processing unit according to any preceding item wherein the cathodic products of electrochemical separation include calcium, sodium, magnesium and phosphorus.
13. A processing unit according to any preceding item wherein the anodic products of electrochemical separation include chloride and sulfate.
14. A desalination unit comprising:
   a conditioning cell in unidirectional fluid communication with,
   an electrochemical separation cell comprising cation and anion selective membranes, the separation cell being in unidirectional fluid communication with,
   a cathodic reaction cell, and
   an anodic reaction cell;
   wherein in use:
   the separation cell comprises a first aqueous solution including conditioned sea water,
   the cathodic reaction cell comprises a second aqueous solution including cathodic products of electrochemical separation of the conditioned sea water, and sea water, and
   the anodic reaction cell comprises a third aqueous solution including anodic products of electrochemical separation of the conditioned sea water, and deionised water.
15. A greenhouse gas sequestration unit comprising:
   a conditioning cell in unidirectional fluid communication with,
   an electrochemical separation cell comprising cation and anion selective membranes, the separation cell being in unidirectional fluid communication with,
   a cathodic reaction cell, and
   an anodic reaction cell;
   wherein in use:
   the separation cell comprises an ion-containing first aqueous solution,
   the cathodic reaction cell comprises a second aqueous solution including cathodic products of electrochemical separation of the first aqueous solution and micronised greenhouse gases, and
   the anodic reaction cell comprises a third aqueous solution including anodic products of electrochemical separation of the first aqueous solution.
16. Use of a processing unit according to any of items 1-13 in one or more applications selected from desalination and greenhouse gas sequestration.
17. A method of water or gas processing comprising the steps of:
   a) providing an ion-containing first aqueous solution in an electrochemical separation cell,
   b) separating the ions into cathodic and anodic products using electrolysis,
   c) transferring the cathodic products to the cathodic reaction cell and the anodic products to the anodic reaction cell,
   d) contacting the cathodic products of electrochemical separation of the first aqueous solution with water to form a second aqueous solution and salts of the cathodic products,
   e) contacting the anodic products of electrochemical separation of the first aqueous solution with water to form a third aqueous solution,
   f) releasing the treated first aqueous solution from the processing unit,
   g) releasing the second aqueous solution and salts of the cathodic products from the processing unit, and
   h) releasing the third aqueous solution from the processing unit.
18. A method according to item 17 comprising the additional step of forming the first aqueous solution from water which has been passed through a conditioning cell.
19. A method according to item 18 wherein the conditioning cell neutralises the organic and biological media from the water.
20. A method according to any of items 17 to 19 wherein the first aqueous solution is released from the processing unit as potable or brackish water.
21. A method according to any of items 17 to 20 wherein step d) additionally comprises contacting greenhouse gases with water to form the second aqueous solution and products selected from salts of the cathodic products, salts of the anions formed from dissolution of the greenhouse gases, elemental gases/acids, and combinations thereof; and wherein the gas processing is greenhouse gas sequestration.
22. A method according to item 21 comprising the additional step of micronising the greenhouse gases before contacting with water.
23. A method according to item 21 or item 22 wherein the greenhouse gases are selected from carbon dioxide, SOₓ, N₂O and NOₓ.
24. A method according to any of items 17 to 23 wherein the salts of the cathodic products include the carbonates, hydrogen carbonates, chlorides, sulfates and/or hydrates of metals selected from sodium, calcium, potassium and magnesium.
25. A method according to any of items 17 to 24 wherein the second aqueous solution and products formed in the cathodic reaction cell are released from the processing unit into the sea.
26. A method according to any one of items 17 to 25 wherein the anodic products of electrochemical separation include chloride and/or sulfate.
27. A method according to item 26 wherein the chloride is released from the processing unit as chlorine gas.
28. A method according to item 26 or item 27 wherein the sulfate is released from the processing unit as sulfuric acid.
29. A desalination method comprising the steps of:
   a) passing sea water through a conditioning cell,
   b) providing the conditioned sea water to an electrochemical separation cell,
   c) separating the conditioned sea water into cathodic and anodic products using electrolysis,
   d) transferring the cathodic products to the cathodic reaction cell and the anodic products to the anodic reaction cell,
   e) contacting the cathodic products of electrochemical separation of the conditioned sea water with sea water to form a second aqueous solution and salts of the cathodic products,
   f) contacting the anodic products of electrochemical separation of the first aqueous solution with deionised water to form a third aqueous solution,
   g) releasing the electrolysed conditioned sea water from the processing unit as brackish or potable water,
   h) releasing the second aqueous solution and salts of the cathodic products from the processing unit, and
   i) releasing the third aqueous solution from the processing unit.
30. A method of greenhouse gas sequestration comprising the steps of:
   a) passing water through a conditioning cell,
   b) providing the conditioned water to an electrochemical separation cell,
   c) separating the ions into cathodic and anodic products using electrolysis,
   d) transferring the cathodic products to the cathodic reaction cell and the anodic products to the anodic reaction cell,
   e) contacting micronised greenhouse gases and the cathodic products of electrochemical separation of the first aqueous solution with water to form a second aqueous solution and salts of the cathodic products,
   f) contacting the anodic products of electrochemical separation of the first aqueous solution with water to form a third aqueous solution,
   g) releasing the treated first aqueous solution from the processing unit,
   h) releasing the second aqueous solution and salts of the greenhouse gases and cathodic products from the processing unit, and
   i) releasing the third aqueous solution from the processing unit.
31. Use of a method according to any one of items 17 to 28 in one or more applications selected from desalination and greenhouse gas sequestration.
32. A processing unit, method or use substantially as described herein with reference to the drawings.

## Claims

1. A processing unit comprising:
an electrochemical separation cell in fluid communication with,
a cathodic reaction cell, and
an anodic reaction cell;
wherein in use:
the separation cell comprises an ion-containing first aqueous solution,
the cathodic reaction cell comprises a second aqueous solution including cathodic products of electrochemical separation of the first aqueous solution, and
the anodic reaction cell comprises a third aqueous solution including anodic products of electrochemical separation of the first aqueous solution.

2. A processing unit according to claim 1 additionally comprising a conditioning cell in fluid communication with the separation cell.

3. A processing unit according to claim 2 wherein the first aqueous solution is formed from water which has first passed through the conditioning cell.

4. A processing unit according to any preceding claim wherein the second aqueous solution is formed from water which has been filtered.

5. A processing unit according to any preceding claim wherein the separation cell includes cation and anion selective membranes.

6. A processing unit according to any preceding claim wherein the fluid communication between the separation cell and the cathodic and anodic reaction cells is unidirectional from the separation cell to the cathodic and anodic reaction cells.

7. A processing unit according to any preceding claim wherein the first and second aqueous solutions are formed from water from the same source.

8. A processing unit according to claim 7 wherein the source is sea water.

9. A processing unit according to any preceding claim wherein the third aqueous solution is formed from deionised water.

10. A processing unit according to any preceding claim wherein the ions of the first and/or second aqueous solutions are selected from ions found in sea water and/or solubilised greenhouse gases.

11. A processing unit according to any preceding claim wherein the ions of the first and/or second aqueous solutions are selected from sodium, potassium, iron, calcium, magnesium, phosphorus, cyanide, carbonate, chloride, sulfate, sulfite, nitrate, and nitrite.

12. A processing unit according to any preceding claim wherein the cathodic products of electrochemical separation include calcium, sodium, magnesium and phosphorus.

13. A processing unit according to any preceding claim wherein the anodic products of electrochemical separation include chloride and sulfate.

14. A desalination unit comprising:
a conditioning cell in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises a first aqueous solution including conditioned sea water,
the cathodic reaction cell comprises a second aqueous solution including cathodic products of electrochemical separation of the conditioned sea water, and sea water, and
the anodic reaction cell comprises a third aqueous solution including anodic products of electrochemical separation of the conditioned sea water, and deionised water.

15. A greenhouse gas sequestration unit comprising:
a conditioning cell in unidirectional fluid communication with,
an electrochemical separation cell comprising cation and anion selective membranes, the separation cell being in unidirectional fluid communication with,
a cathodic reaction cell, and
an anodic reaction cell;
wherein in use:
the separation cell comprises an ion-containing first aqueous solution,
the cathodic reaction cell comprises a second aqueous solution including cathodic products of electrochemical separation of the first aqueous solution and micronised greenhouse gases, and
the anodic reaction cell comprises a third aqueous solution including anodic products of electrochemical separation of the first aqueous solution.

16. Use of a processing unit according to any of claims 1-13 in one or more applications selected from desalination and greenhouse gas sequestration.

17. A method of water or gas processing comprising the steps of:
a) providing an ion-containing first aqueous solution in an electrochemical separation cell,
b) separating the ions into cathodic and anodic products using electrolysis,
c) transferring the cathodic products to the cathodic reaction cell and the anodic products to the anodic reaction cell,
d) contacting the cathodic products of electrochemical separation of the first aqueous solution with water to form a second aqueous solution and salts of the cathodic products,
e) contacting the anodic products of electrochemical separation of the first aqueous solution with water to form a third aqueous solution,
f) releasing the treated first aqueous solution from the processing unit,
g) releasing the second aqueous solution and salts of the cathodic products from the processing unit, and
h) releasing the third aqueous solution from the processing unit.

18. A method according to claim 17 comprising the additional step of forming the first aqueous solution from water which has been passed through a conditioning cell.

19. A method according to claim 18 wherein the conditioning cell neutralises the organic and biological media from the water.

20. A method according to any of claims 17 to 19 wherein the first aqueous solution is released from the processing unit as potable or brackish water.

21. A method according to any of claims 17 to 20 wherein step d) additionally comprises contacting greenhouse gases with water to form the second aqueous solution and products selected from salts of the cathodic products, salts of the anions formed from dissolution of the greenhouse gases, elemental gases/acids, and combinations thereof; and wherein the gas processing is greenhouse gas sequestration.

22. A method according to claim 21 comprising the additional step of micronising the greenhouse gases before contacting with water.

23. A method according to claim 21 or claim 22 wherein the greenhouse gases are selected from carbon dioxide, SOₓ, N₂O and NOₓ.

24. A method according to any of claims 17 to 23 wherein the salts of the cathodic products include the carbonates, hydrogen carbonates, chlorides, sulfates and/or hydrates of metals selected from sodium, calcium, potassium and magnesium.

25. A method according to any of claims 17 to 24 wherein the second aqueous solution and products formed in the cathodic reaction cell are released from the processing unit into the sea.

26. A method according to any one of claims 17 to 25 wherein the anodic products of electrochemical separation include chloride and/or sulfate.

27. A method according to claim 26 wherein the chloride is released from the processing unit as chlorine gas.

28. A method according to claim 26 or claim 27 wherein the sulfate is released from the processing unit as sulfuric acid.

29. A desalination method comprising the steps of:
a) passing sea water through a conditioning cell,
b) providing the conditioned sea water to an electrochemical separation cell,
c) separating the conditioned sea water into cathodic and anodic products using electrolysis,
d) transferring the cathodic products to the cathodic reaction cell and the anodic products to the anodic reaction cell,
e) contacting the cathodic products of electrochemical separation of the conditioned sea water with sea water to form a second aqueous solution and salts of the cathodic products,
f) contacting the anodic products of electrochemical separation of the first aqueous solution with deionised water to form a third aqueous solution,
g) releasing the electrolysed conditioned sea water from the processing unit as brackish or potable water,
h) releasing the second aqueous solution and salts of the cathodic products from the processing unit, and
i) releasing the third aqueous solution from the processing unit.

30. A method of greenhouse gas sequestration comprising the steps of:
a) passing water through a conditioning cell,
b) providing the conditioned water to an electrochemical separation cell,
c) separating the ions into cathodic and anodic products using electrolysis,
d) transferring the cathodic products to the cathodic reaction cell and the anodic products to the anodic reaction cell,
e) contacting micronised greenhouse gases and the cathodic products of electrochemical separation of the first aqueous solution with water to form a second aqueous solution and salts of the cathodic products,
f) contacting the anodic products of electrochemical separation of the first aqueous solution with water to form a third aqueous solution,
g) releasing the treated first aqueous solution from the processing unit,
h) releasing the second aqueous solution and salts of the greenhouse gases and cathodic products from the processing unit, and
i) releasing the third aqueous solution from the processing unit.

31. Use of a method according to any one of claims 17 to 28 in one or more applications selected from desalination and greenhouse gas sequestration.

32. A processing unit, method or use substantially as described herein with reference to the drawings.
